# EUROPÄISCHE PATENTSCHRIFT

(11) **EP 2 247 443 B1**
(45) Veröffentlichungstag und Bekanntmachung des Hinweises auf die Patenterteilung: **22.08.2018**
(21) Anmeldenummer: 09714906.6
(22) Anmeldetag: 23.02.2009
(51) Int. Cl.: B32B 15/08, B32B 27/32, B32B 27/36, B32B 27/40, B32B 5/02, B32B 7/14, B32B 9/02, B32B 9/04, B32B 15/04, B32B 27/34, B32B 15/12, B32B 15/14, B32B 27/06, B32B 27/08, B32B 27/10

(54) **MEHRSCHICHTIGE VERBUNDMATERIALIEN, DIE EINE KUNSTSTOFF- ODER METALLFOLIE UMFASSEN, VERFAHREN ZU IHRER HERSTELLUNG UND IHRE VERWENDUNG**
MULTI-LAYER COMPOSITE MATERIALS COMPRISING A PLASTIC OR METAL FOIL, CORRESPONDING METHOD OF PRODUCTION AND USE THEREOF
MATÉRIAUX COMPOSITES MULTICOUCHES COMPORTANT UNE FEUILLE PLASTIQUE OU MÉTALLIQUE, PROCÉDÉS DE FABRICATION ET UTILISATION DE CES MATÉRIAUX

(30) Priorität: 27.02.2008 EP 08102076
(43) Veröffentlichungstag der Anmeldung: 10.11.2010
(73) Patentinhaber: BASF SE, 67056 Ludwigshafen am Rhein (DE)
(72) Erfinder: JOKISCH, Carl, 68259 Mannheim (DE); WEISER, Jürgen, 69198 Schriesheim (DE)
(74) Vertreter: BASF IP Association
(86) Internationale Anmeldenummer: PCT/EP2009/052108
(87) Internationale Veröffentlichungsnummer: WO 2009/106500

(56) Entgegenhaltungen:
- EP-A- 0 365 902
- EP-A- 1 529 822
- EP-A- 1 970 418
- EP-A1- 0 399 600
- WO-A-95/30793
- GB-A- 2 020 301
- Jürgen Falbe ET AL: "Kunststoffe" In: "Römpp Chemie Lexikon", 1 January 1990 (1990-01-01), Georg Thieme Verlag, Stuttgart New York, XP055396451, pages 2398-2403, * page 2398, left-hand column *

## Beschreibung

Die vorliegende Erfindung betrifft mehrschichtige Verbundmaterialien, gemäß Anspruch 1 umfassend als Komponenten:
(A) eine Kunststoff- oder Metallfolie,
(B) gegebenenfalls mindestens eine Verbindungsschicht und
(C) eine Polyurethanschicht, die Kapillaren aufweist, die über die gesamte Dicke der Polyurethanschicht gehen.

Außerdem betrifft die vorliegende Erfindung ein Verfahren zur Herstellung der erfindungsgemäßen mehrschichtigen Verbundmaterialien und ihre Verwendung.

Kunststoff- und Metallfolien werden in vielen Anwendungen benötigt, beispielsweise in Verpackungen. Ihre mechanischen Eigenschaften, ihr Aussehen und ihr Griff sind in einigen Anwendungen sehr gefragt. So sind beispielsweise hochtransparente Kunststofffolien als Verpackungsmaterial von Gegenständen wie Hemden, Zigaretten, Glückwunschkarten, Büchern oder Tischdecken sehr beliebt. Auch Metallfolien, insbesondere Aluminiumfolien haben beispielsweise bei der Verwendung als Siegel von Getränkeflaschen, insbesondere bei Bierflaschen, ein weites Anwendungsfeld gefunden. Andererseits ist jedoch der Griff nicht so angenehm, dass man derart verpackte Gegenstände lange in der Hand behalten möchte. Die Verschmutzung durch beispielsweise Schweißflecken oder Fingerabdrücke ist auffällig und unästhetisch.

Besonders wichtig sind Folien aus Metall oder insbesondere Kunststoff jedoch bei der Herstellung von elektronischen und elektrischen Geräten, beispielsweise Mobiltelefone (Handys), insbesondere daher, weil man sie tiefziehen und äußerst einfach an die Form des betreffenden Geräts anpassen kann. Für elektronische Geräte, die man in der Hand hält, weisen Kunststofffolien jedoch einen vielfach nicht genügenden Griff auf.

Es bestand also die Aufgabe, Folien wie Metall- oder Kunststofffolien so zu verarbeiten, dass sie ein ansprechendes optisches Äußeres und eine angenehme Haptik aufweisen und unempfindlich sind gegen Fingerabdrücke, Schweißflecken und Feuchtigkeit.

Dementsprechend wurden die eingangs definierten mehrschichtigen Verbundmaterialien gefunden. Sie umfassen als Komponenten:
(A) eine Kunststoff- oder Metallfolie,
(B) gegebenenfalls mindestens eine Verbindungsschicht und
(C) eine Polyurethanschicht, die Kapillaren aufweist, die über die gesamte Dicke der Polyurethanschicht gehen.

Mehrschichtige Verbundmaterialien, die eine Kunststoff- oder Metallfolie umfassen, Verfahren zu ihrer Herstellung und ihre Verwendung

Die vorliegende Erfindung betrifft mehrschichtige Verbundmaterialien, umfassend als Komponenten:
(A) eine Kunststoff- oder Metallfolie,
(B) mindestens eine Verbindungsschicht und
(C) eine Polyurethanschicht, die Kapillaren aufweist, die über die gesamte Dicke der Polyurethanschicht gehen,
wobei Polyurethanschicht (C) eine mittlere Dicke im Bereich von 15 bis 300 µm und eine Musterung aufweist,
wobei eine Kunststofffolie ein Flächengebilde aus einem synthetischen Polymer ist, das eine Dicke von 0,5 µm bis 1 mm aufweist, und wobei Verbindungsschicht (B) eine Schicht eines gehärteten organischen Klebstoffs ist.

Außerdem betrifft die vorliegende Erfindung ein Verfahren zur Herstellung der erfindungsgemäßen mehrschichtigen Verbundmaterialien und ihre Verwendung.

Aus EP 1 529 822 A1 sind 2 Komponenten ("two package") Polyurethan Beschichtungszusammensetzungen und hiermit beschichtete Gegenstände bekannt, die ein mattes Erscheinungsbild mit ausgezeichneten physikalischen Eigenschaften hervorrufen sollen.

Ferner offenbart GB 2 020 301 A einen Prozess für die Herstellung von wasserunlöslichen, nicht wasser-dispergierbaren Polyurethanharzen und Folienmaterialien. Zur Herstellung von freistehenden, flächigen Polyurethanmaterialien ("*polyurethane sheets*") wird das Polyurethan (zumeist) temporär auf ein Substrat aufgetragen.

Aus EP 0 365 902 A2 sind Polyurethan-Dispersionen und Lösemittel enthaltende Beschichtungsmassen (Streichpasten) und deren Verwendung zur Herstellung von wasserdampfdurchlässigen Polyurethan-Beschichtungen, vorzugsweise auf Textil oder Ledersubstraten, bekannt. Die Streichpasten können nach dem Verfahren der Verdampfungskoagulation hergestellt und auf ein Trägermaterial aufgetragen werden.

WO 95/30793 offenbart dreidimensionale, saumlose, wasserdichte, atmungsaktive, flexible Verbundmaterialien aus zwei Schichten zur Verwendung in Stoffen in Bekleidung wie Handschuhen oder Strümpfen. Saumlose, glatte Strukturen werden durch Eintauchen von dreidimensionalen Artikel in Polymere Lösung erstellt.

Aus EP 0 399 600 A1 sind Verfahren zur Herstellung eines aus Polyurethanschichten bestehenden Produkts unter Verwendung eines bahnförmigen Trennmediums, wobei mindestens die Deckschicht des Produkts eine dekorative Prägung aufweist und die Deckschicht ausgehend von einer Lösung eines geeigneten Polyurethans erhalten wird, bekannt. Die an der Deckschicht angrenzende Basisschicht wird während der Herstellung des Produkts als poröser Polyurethanfilm zugeführt. Die dekorative Prägung bzw. Musterung der Deckschicht wird durch ein wabenförmiges Trennmedium bestimmt.

Kunststoff- und Metallfolien werden in vielen Anwendungen benötigt, beispielsweise in Verpackungen. Ihre mechanischen Eigenschaften, ihr Aussehen und ihr Griff sind in einigen Anwendungen sehr gefragt. So sind beispielsweise hochtransparente Kunststofffolien als Verpackungsmaterial von Gegenständen wie Hemden, Zigaretten, Glückwunschkarten, Büchern oder Tischdecken sehr beliebt. Auch Metallfolien, insbesondere Aluminiumfolien haben beispielsweise bei der Verwendung als Siegel von Getränkeflaschen, insbesondere bei Bierflaschen, ein weites Anwendungsfeld gefunden. Andererseits ist jedoch der Griff nicht so angenehm, dass man derart verpackte Gegenstände lange in der Hand behalten möchte. Die Verschmutzung durch beispielsweise Schweißflecken oder Fingerabdrücke ist auffällig und unästhetisch.

Besonders wichtig sind Folien aus Metall oder insbesondere Kunststoff jedoch bei der Herstellung von elektronischen und elektrischen Geräten, beispielsweise Mobiltelefone (Handys), insbesondere daher, weil man sie tiefziehen und äußerst einfach an die Form des betreffenden Geräts anpassen kann. Für elektronische Geräte, die man in der Hand hält, weisen Kunststofffolien jedoch einen vielfach nicht genügenden Griff auf.

Es bestand also die Aufgabe, Folien wie Metall- oder Kunststofffolien so zu verarbeiten, dass sie ein ansprechendes optisches Äußeres und eine angenehme Haptik aufweisen und unempfindlich sind gegen Fingerabdrücke, Schweißflecken und Feuchtigkeit.

Dementsprechend wurden die eingangs definierten mehrschichtigen Verbundmaterialien gefunden. Sie umfassen als Komponenten:
(A) eine Kunststoff- oder Metallfolie,
(B) mindestens eine Verbindungsschicht und
(C) eine Polyurethanschicht, die Kapillaren aufweist, die über die gesamte Dicke der Polyurethanschicht gehen,
wobei Polyurethanschicht (C) eine mittlere Dicke im Bereich von 15 bis 300 µm und eine Musterung aufweist,
wobei eine Kunststofffolie ein Flächengebilde aus einem synthetischen Polymer ist, das eine Dicke von 0,5 µm bis 1 mm aufweist, und
wobei Verbindungsschicht (B) eine Schicht eines gehärteten organischen Klebstoffs ist.

Unter Kunststoff- oder Metallfolien (A) versteht man im Rahmen der vorliegenden Erfindung Flächengebilde aus Metall oder einem synthetischen Polymer, die eine Dicke von 0,5 µm bis 1 mm, vorzugsweise 1 µm bis 0,5 mm und besonders bevorzugt bis 0,15 mm aufweisen können. Kunststoff- und Metallfolien (A) werden im Rahmen der vorliegenden Erfindung auch unter dem Begriff Folien (A) subsumiert.

Vorzugsweise ist Folie (A) manuell biegbar, das heißt ohne Zuhilfenahme eines Werkzeugs.

Unter Metallen sind Silber, Gold, Zinn und insbesondere Aluminium bevorzugt.

Unter Kunststoffen sind Polyolefine wie Polyolefine wie Polyethylen und Polypropylen, weiterhin Polyester, Polyamid, Polycarbonat, Polyvinylchlorid, Polymethylmethacrylat und Polystyrol bevorzugt, wobei unter Polyolefinen wie Polyethylen und Polypropylen nicht nur die betreffenden Ethylen- und Propylenhomopolymere, sondern auch Copolymere mit anderen Olefinen wie beispielsweise Acrylsäure oder 1-Olefinen zu verstehen sind. So sind unter Polyethylen insbesondere Ethylencopolymere mit 0,1 bis unter 50 Gew.-% eines oder mehrerer 1-Olefine wie Propylen, 1-Buten, 1-Penten, 1-Hexen, 1-Octen, 1-Decen oder 1-Dodecen zu verstehen, wobei Propylen, 1-Buten und 1-Hexen bevorzugt sind. Unter Polypropylen sind insbesondere auch Propylencopolymere mit 0,1 bis unter 50 Gew.-% Ethylen und/oder eines oder mehrerer 1-Olefine wie 1-Buten, 1-Penten, 1-Hexen, 1-Octen, 1-Decen oder 1-Dodecen zu verstehen, wobei Ethylen, 1-Buten und 1-Hexen bevorzugt sind. Unter Polypropylen ist dabei bevorzugt im wesentlichen isotaktisches Polypropylen zu verstehen.

Folien aus Polyethylen können aus HDPE oder LDPE oder LLDPE hergestellt werden.

Unter Folien aus Polyamid sind solche bevorzugt, die sich von Nylon 6 ableiten.

Unter Folien aus Polyester sind solche aus Polybutylenterephthalat und insbesondere aus Polyethylenterephthalat (PET) bevorzugt.

Unter Folien aus Polycarbonaten sind solche bevorzugt, die sich von Polycarbonaten ableiten, die unter Verwendung von Bisphenol A hergestellt sind.

Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder Acrylaten umfasst.

Kunststofffolien im Sinne der vorliegenden Erfindung können auch Verbundfolien umfassen, beispielsweise Folien, die eine der vorstehend genannten Folien und eine Metallfolie oder Papier umfassen.

Erfindungsgemäßes mehrschichtiges Verbundmaterial umfasst weiterhin mindestens eine Polyurethanschicht (C), die Kapillaren aufweist, die über die gesamte Dicke der Polyurethanschicht gehen. Polyurethanschicht (C), die Kapillaren aufweist, die über die gesamte Dicke der Polyurethanschicht gehen, wird im Rahmen der vorliegenden Erfindung auch kurz als Polyurethanschicht (C) bezeichnet.

In der vorliegenden Erfindung weist Polyurethanschicht (C) eine mittlere Dicke im Bereich von 15 bis 300 µm, bevorzugt von 20 bis 150 µm, besonders bevorzugt von 25 bis 80 µm auf.

In der vorliegenden Erfindung weist Polyurethanschicht (C) Kapillaren auf, die über die gesamte Dicke (Querschnitt) der Polyurethanschicht (C) gehen.

In einer Ausführungsform der vorliegenden Erfindung weist Polyurethanschicht (C) im Mittel mindestens 100, bevorzugt mindestens 250 Kapillaren pro 100 cm² auf.

In einer Ausführungsform der vorliegenden Erfindung weisen die Kapillaren einen mittleren Durchmesser im Bereich von 0,005 bis 0,05 mm, bevorzugt 0,009 bis 0,03 mm auf.

In einer Ausführungsform der vorliegenden Erfindung sind die Kapillaren gleichmäßig über Polyurethanschicht (C) verteilt. In einer bevorzugten Ausführungsform der vorliegenden Erfindung sind die Kapillaren jedoch ungleichmäßig über die Polyurethanschicht (C) verteilt.

In einer Ausführungsform der vorliegenden Erfindung sind die Kapillaren im Wesentlichen gebogen. In einer anderen Ausführungsform der vorliegenden Erfindung weisen die Kapillaren einen im Wesentlichen gradlinigen Verlauf auf.

Die Kapillaren verleihen der Polyurethanschicht (C) eine Luft- und Wasserdampfdurchlässigkeit, ohne dass eine Perforierung erforderlich wäre. In einer Ausführungsform der vorliegenden Erfindung kann die Wasserdampfdurchlässigkeit der Polyurethanschicht (C) über 1,5 mg/cm²·h liegen, gemessen nach DIN 53333. So ist es möglich, dass Feuchtigkeit wie beispielsweise Schweiß durch die Polyurethanschicht (C) hindurch migrieren kann.

In einer Ausführungsform der vorliegenden Erfindung weist Polyurethanschicht (C) zusätzlich zu den Kapillaren noch Poren auf, die nicht über die gesamte Dicke der Polyurethanschicht (C) gehen.

Polyurethanschicht (C) weist eine Musterung auf. Die Musterung kann beliebig sein und beispielsweise die Musterung eines Leders oder einer Holzoberfläche wiedergeben. In einer Ausführungsform der vorliegenden Erfindung kann die Musterung ein Nubukleder wiedergeben.

In einer Ausführungsform der vorliegenden Erfindung weist Polyurethanschicht (C) eine samtartige Erscheinung auf.

In einer Ausführungsform der vorliegenden Erfindung kann die Musterung einer Samtoberfläche entsprechen, beispielsweise mit Härchen mit einer mittleren Länge von 20 bis 500 µm, bevorzugt 30 bis 200 µm und besonders bevorzugt 60 bis 100 µm. Die Härchen können beispielsweise einen kreisförmigen Durchmesser aufweisen. In einer besonderen Ausführungsform der vorliegenden Erfindung haben die Härchen eine kegelförmige Form.

In einer Ausführungsform der vorliegenden Erfindung weist Polyurethanschicht (C) Härchen auf, die in einem mittleren Abstand von 50 bis 350, bevorzugt 100 bis 250 µm zueinander angeordnet sind.

Für den Fall, dass die Polyurethanschicht (C) Härchen aufweist, beziehen sich die Angaben über die mittlere Dicke auf die Polyurethanschicht (C) ohne die Härchen.

Die Polyurethanschicht (C) ist mit Folie (A) über mindestens eine Verbindungsschicht (B) verbunden.

Bei Verbindungsschicht (B) kann es sich um eine durchbrochene, das heißt nicht vollflächig, ausgeprägte Schicht handeln, vorzugsweise eines gehärteten organischen Klebstoffs.

In einer Ausführungsform der vorliegenden Erfindung handelt es sich bei Verbindungsschicht (B) um eine punktförmig, streifenförmig oder gitterförmig, beispielsweise in Form von Rauten, Rechtecken, Quadraten oder einer Bienenwabenstruktur aufgebrachte Schicht. Dann kommt Polyurethanschicht (C) mit Folie (A) an den Lücken der Verbindungsschicht (B) in Berührung.

In einer anderen Ausführungsform der vorliegenden Erfindung handelt es sich bei Verbindungsschicht (B) um eine vollflächig ausgebildete Schicht.

In der vorliegenden Erfindung handelt es sich bei Verbindungsschicht (B) um eine Schicht eines gehärteten organischen Klebstoffs, beispielsweise auf Basis von Polyvinylacetat, Polyacrylat oder insbesondere Polyurethan, vorzugsweise von Polyurethanen mit einer Glastemperatur unter 0° C.

Dabei kann die Härtung des organischen Klebstoffs beispielsweise thermisch, durch aktinische Strahlung oder durch Altern erfolgt sein.

In einer anderen Ausführungsform der vorliegenden Erfindung handelt es sich bei Verbindungsschicht (B) um ein Klebenetz.

In einer Ausführungsform der vorliegenden Erfindung weist Verbindungsschicht (B) eine maximale Dicke von 100 µm, bevorzugt 50 µm, besonders bevorzugt 30 µm, ganz besonders bevorzugt 15 µm auf.

In einer Ausführungsform der vorliegenden Erfindung kann Verbindungsschicht (B) Mikrohohlkugeln enthalten. Unter Mikrohohlkugeln sind im Rahmen der vorliegenden Erfindung kugelförmige Partikel mit einem mittleren Durchmesser im Bereich von 5 bis 20 µm aus polymerem Material, insbesondre aus halogeniertem Polymer wie beispielsweise Polyvinylchlorid oder Polyvinylidenchlorid oder Copolymer von Vinylchlorid mit Vinylidenchlorid, zu verstehen. Mikrohohlkugeln können leer sein oder vorzugsweise gefüllt mit einer Substanz, deren Siedepunkt geringfügig tiefer liegt als die Zimmertemperatur, beispielsweise mit n-Butan und insbesondere mit Isobutan.

In einer Ausführungsform der vorliegenden Erfindung kann Polyurethanschicht (C) mit Folie (A) über mindestens zwei Verbindungsschichten (C) verbunden sein, die eine gleiche oder unterschiedliche Zusammensetzung aufweisen. So kann die eine Verbindungsschicht (B) ein Pigment enthalten und die andere Verbindungsschicht (B) pigmentfrei sein.

In einer Variante kann die eine Verbindungsschicht (B) Mikrohohlkugeln enthalten und die andere Verbindungsschicht (B) nicht.

In einer Ausführungsform der vorliegenden Erfindung kann erfindungsgemäßes mehrschichtiges Verbundmaterial keine weiteren Schichten aufweisen. In einer anderen Ausführungsform der vorliegenden Erfindung kann erfindungsgemäßes mehrschichtiges Verbundmaterial mindestens eine Zwischenschicht (D) umfassen, die zwischen Folie (A) und Verbindungsschicht (B), zwischen Verbindungsschicht (B) und Polyurethanschicht (C) oder zwischen zwei Verbindungsschichten (B), die gleich oder verschieden sein können, liegt. Dabei wird Zwischenschicht (D) gewählt aus Textil, Papier, Vliesstoffen, und Vliesstoffen (Non-wovens) aus synthetischen Materialien wie Polypropylen oder Polyurethan, insbesondere Vliesstoffen aus thermoplastischem Polyurethan.

Matrizen sind keine Ausführungsformen von Zwischenschichten (D) im Rahmen der vorliegenden Erfindung.

In den Ausführungsformen, in denen erfindungsgemäßes mehrschichtiges Verbundmaterial mindestens eine Zwischenschicht (D) aufweist, kommt Polyurethanschicht (C) vorzugsweise nicht direkt mit Folie (A) in Berührung, sondern mit Zwischenschicht (D).

In einer Ausführungsform der vorliegenden Erfindung kann Zwischenschicht (D) einen mittleren Durchmesser (Dicke) im Bereich von 0,05 mm bis 5 cm, bevorzugt 0,1 mm bis 0,5 cm, besonders bevorzugt 0,2 mm bis 2 mm aufweisen.

Vorzugsweise weist Zwischenschicht (D) eine Wasserdampfdurchlässigkeit im Bereich von größer als 1,5 mg/cm²·h auf, gemessen nach DIN 53333.

Erfindungsgemäße mehrschichtige Verbundmaterialien weisen eine hohe mechanische Festigkeit und Echtheiten auf. Weiterhin können sie eine hohe Wasserdampf- und Luftdurchlässigkeit aufweisen. Tropfen von verschütteter Flüssigkeit können leicht entfernt werden, beispielsweise mit einem Lappen. Außerdem weisen erfindungsgemäße mehrschichtige Verbundmaterialien ein gefälliges Aussehen und einen sehr angenehmen weichen Griff auf.

Erfindungsgemäße mehrschichtige Verbundmaterialien lassen sich beispielsweise als Verpackungsmaterial verwenden, wenn eine ansprechende Verpackung gefragt ist, weiterhin zur Dekoration. Erfindungsgemäße mehrschichtige Verbundmaterialien lassen sich weiterhin zur Dekoration verwenden. Außerdem kann man erfindungsgemäße mehrschichtige Verbundmaterialien hinterschäumen oder hinterformen und so hergestellte Bauteile vielseitig verwenden, beispielsweise im Automobilsektor.

Weiterhin kann man erfindungsgemäße mehrschichtige Verbundmaterialien tiefziehen und beispielsweise elektronische oder elektrische Geräte damit bedecken.

In einer Ausführungsform der vorliegenden Erfindung werden erfindungsgemäße mehrschichtige Verbundmaterialien vorteilhaft angewendet in aufwändigen Druckerzeugnissen wie Broschüren, Prospekten, Katalogen, insbesondere in Jahresberichten und in Büchern, beispielsweise in Bucheinbänden.

Ein weiterer Gegenstand der vorliegenden Erfindung ist ein Verfahren zur Herstellung von erfindungsgemäßen mehrschichtigen Verbundmaterialien, im Rahmen der vorliegenden Erfindung auch als erfindungsgemäßes Herstellungsverfahren bezeichnet. In einer Ausführungsform des erfindungsgemäßen Herstellungsverfahrens geht man so vor, mit Hilfe einer Matrize eine Polyurethanschicht (C) bildet, mindestens einen organischen Klebstoff vollflächig oder partiell auf Folie (A) und/oder auf Polyurethanschicht (C) aufbringt und dann Polyurethanschicht (C) mit Folie (A) punktförmig, streifenartig oder flächig verbindet.

In einer Ausführungsform der vorliegenden Erfindung stellt man erfindungsgemäßes mehrschichtiges Verbundmaterial durch ein Beschichtungsverfahren her, indem man zunächst einen Polyurethanfilm (C) bereitstellt, mindestens ein Folie (A) oder den Polyurethanfilm (C) oder beides auf je einer Fläche teilweise, beispielsweise musterförmig, mit organischem Klebstoff bestreicht und dann die beiden Flächen miteinander in Kontakt bringt. Danach kann man noch das so erhältliche System aneinanderpressen oder thermisch behandeln oder unter Erwärmen aneinanderpressen.

Der Polyurethanfilm (C) bildet die spätere Polyurethanschicht (C) des erfindungsgemäßen mehrschichtigen Verbundmaterials. Den Polyurethanfilm (C) kann man wie folgt herstellen.

Man bringt eine wässrige Polyurethan-Dispersion auf eine Matrize auf, die vorgewärmt ist, lässt das Wasser verdunsten und überführt danach den sich so bildenden Polyurethanfilm (C) auf Folie (A).

Das Aufbringen von wässriger Polyurethan-Dispersion auf die Matrize kann nach an sich bekannten Methoden erfolgen, insbesondere durch Aufsprühen, beispielsweise mit einer Sprühpistole.

Die Matrize kann eine Musterung, auch Strukturierung genannt, aufweisen, die man beispielsweise durch Lasergravur erzeugt oder durch Abformen.

In einer Ausführungsform der vorliegenden Erfindung stellt man eine Matrize bereit, die eine elastomere Schicht oder einen Schichtverbund aufweist, umfassend eine elastomere Schicht auf einem Träger, wobei die elastomere Schicht ein Bindemittel sowie gegebenenfalls weitere Zusatz- und Hilfsstoffe umfasst. Die Bereitstellung einer Matrize kann dann die folgenden Schritte umfassen:
1) Aufbringen eines flüssigen Bindemittels, das gegebenenfalls Zusatz- und/oder Hilfsstoffe enthält, auf eine gemusterte Oberfläche, beispielsweise eine andere Matrize oder ein Originalmuster,
2) Aushärten des Bindemittels, beispielsweise durch thermisches Aushärten, Strahlungshärtung oder durch Alternlassen,
3) Trennen der so erhältlichen Matrize und gegebenenfalls Aufbringen auf einen Träger, beispielsweise eine Metallplatte oder einen Metallzylinder.

In einer Ausführungsform der vorliegenden Erfindung geht man so vor, dass man ein flüssiges Silikon auf ein Muster aufgibt, das Silikon altern und somit aushärten lässt und dann abzieht. Die Silikonfolie wird dann auf einem Aluträger geklebt.

In einer bevorzugten Ausführungsform der vorliegenden Erfindung stellt man eine Matrize bereit, die eine lasergravierbare Schicht oder einen Schichtverbund aufweist, umfassend eine lasergravierbare Schicht auf einem Träger, wobei die lasergravierbare Schicht ein Bindemittel sowie gegebenenfalls weitere Zusatz- und Hilfsstoffe umfasst. Die lasergravierbare Schicht ist vorzugsweise außerdem elastomer.

In einer bevorzugten Ausführungsform umfasst die Bereitstellung einer Matrize die folgenden Schritte:
1) Bereitstellen einer lasergravierbaren Schicht oder eines Schichtverbunds, umfassend eine lasergravierbare Schicht auf einem Träger, wobei die lasergravierbare Schicht ein Bindemittel sowie vorzugsweise Zusatz- und Hilfsstoffe umfasst,
2) thermochemische, photochemische oder aktinische Verstärkung der lasergravierbaren Schicht,
3) Eingravieren einer der Oberflächenstruktur der oberflächenstrukturierten Beschichtung entsprechenden Oberflächenstruktur in die lasergravierbare Schicht mit einem Laser.

Die lasergravierbare Schicht, die vorzugsweise elastomer ist, oder der Schichtverbund können auf einem Träger vorliegen, vorzugsweise liegen sie auf einem Träger vor. Beispiele für geeignete Träger umfassen Gewebe und Folien aus Polyethylenterephthalat (PET), Polyethylennaphthalat (PEN), Polybutylenterephthalat (PBT), Polyethylen, Polypropylen, Polyamid oder Polycarbonat, bevorzugt PET- oder PEN-Folien. Ebenfalls als Träger geeignet sind Papiere und Gewirke, beispielsweise aus Cellulose. Als Träger können auch konische oder zylindrische Röhren aus den besagten Materialien, so genannte Sleeves, eingesetzt werden. Für Sleeves eignen sich auch Glasfasergewebe oder Verbundmaterialien aus Glasfasern und polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl oder anderen Eisenlegierungen.

In einer Ausführungsform der vorliegenden Erfindung kann der Träger zur besseren Haftung der lasergravierbaren Schicht mit einer Haftschicht beschichtet sein. In einer anderen Ausführungsform der vorliegenden Erfindung ist keine Haftschicht erforderlich.

Die lasergravierbare Schicht umfasst mindestens ein Bindemittel, das ein Präpolymer sein kann, welches im Zuge einer thermochemischen Verstärkung zu einem Polymer reagiert. Geeignete Bindemittel kann man je nach den gewünschten Eigenschaften der lasergravierbaren Schicht bzw. der Matrize, beispielsweise im Hinblick auf Härte, Elastizität oder Flexibilität, auswählen. Geeignete Bindemittel lassen sich im Wesentlichen in 3 Gruppen einteilen, ohne dass die Bindemittel hierauf beschränkt sein sollen.

Die erste Gruppe umfasst solche Bindemittel, die über ethylenisch ungesättigte Gruppen verfügen. Die ethylenisch ungesättigten Gruppen sind photochemisch, thermochemisch, mittels Elektronenstrahlen oder mit einer beliebigen Kombination dieser Prozesse vernetzbar. Zusätzlich kann eine mechanische Verstärkung mittels Füllstoffen vorgenommen werden. Derartige Bindemittel sind beispielsweise solche, die 1,3-Dien-Monomere wie Isopren oder 1,3-Butadien einpolymerisiert enthalten. Die ethylenisch ungesättigte Gruppe kann dabei einmal als Kettenbaustein des Polymeren fungieren (1,4-Einbau), oder sie kann als Seitengruppe (1,2-Einbau) an die Polymerkette gebunden sein. Als Beispiele seien Naturkautschuk, Polybutadien, Polyisopren, Styrol-Butadien-Kautschuk, Nitril-Butadien-Kautschuk, Acrylnitril-Butadien-Styrol (ABS) Copolymer, Butyl-Kautschuk, Styrol-Isopren-Kautschuk, Polychloropren, Polynorbornen-Kautschuk, Ethylen-Propylen-Dien-Kautschuk (EPDM) oder Polyurethan-Elastomere mit ethylenisch ungesättigten Gruppen genannt.

Weitere Beispiele umfassen thermoplastisch elastomere Blockcopolymere aus Alkenylaromaten und 1,3-Dienen. Bei den Blockcopolymeren kann es sich sowohl um lineare Blockcopolymere oder auch um radiale Blockcopolymere handeln. Üblicherweise handelt es sich um Dreiblockcopolymere vom A-B-A-Typ, es kann sich aber auch um Zweiblockpolymere vom A-B-Typ handeln, oder um solche mit mehreren alternierenden elastomeren und thermoplastischen Blöcken, z.B. A-B-A-B-A. Es können auch Gemische zweier oder mehrerer unterschiedlicher Blockcopolymere eingesetzt werden. Handelsübliche Dreiblockcopolymere enthalten häufig gewisse Anteile an Zweiblockcopolymeren. Dien-Einheiten können 1,2- oder 1,4-verknüpft sein. Es können sowohl Blockcopolymere vom Styrol-Butadien wie vom Styrol-Isopren-Typ eingesetzt werden. Sie sind beispielsweise unter dem Namen Kraton® im Handel erhältlich. Weiterhin einsetzbar sind auch thermoplastisch elastomere Blockcopolymere mit Endblöcken aus Styrol und einem statistischen Styrol-Butadien-Mittelblock, die unter dem Namen Styroflex® erhältlich sind.

Weitere Beispiele von Bindemitteln mit ethylenisch ungesättigten Gruppen umfassen modifizierte Bindemittel, bei denen vernetzbare Gruppen durch Pfropfungsreaktionen in das polymere Molekül eingeführt werden.

Die zweite Gruppe umfasst solche Bindemittel, die über funktionelle Gruppen verfügen. Die funktionellen Gruppen sind thermochemisch, mittels Elektronenstrahlen, photochemisch oder mit einer beliebigen Kombination dieser Prozesse vernetzbar. Zusätzlich kann eine mechanische Verstärkung mittels Füllstoffen vorgenommen werden. Beispiele geeigneter funktioneller Gruppen umfassen -Si(HR¹)O-, -Si(R¹R²)O-, -OH, -NH₂, -NHR¹, -COOH, -COOR¹, -COHN₂, -O-C(O)NHR¹, -SO₃H oder -CO-. Beispiele von Bindemitteln umfassen Silikonelastomere, Acrylat-Kautschuke, Ethylen-Acrylat-Kautschuke, Ethylen-Acrylsäure-Kautschuke oder Ethylen-Vinylacetat-Kautschuke sowie deren teilweise hydrolysierte Derivate, thermoplastisch elastomere Polyurethane, sulfonierte Polyethylene oder thermoplastisch elastomere Polyester. Dabei sind R¹ und - so vorhanden - R² verschieden oder vorzugsweise gleich und gewählt aus organischen Gruppen und insbesondere C₁-C₆-Alkyl.

In einer Ausführungsform der vorliegenden Erfindung kann man Bindemittel einsetzen, die sowohl über ethylenisch ungesättigte Gruppen als auch über funktionelle Gruppen verfügen. Beispiele umfassen additionsvernetzende Silikonelastomere mit funktionellen und ethylenisch ungesättigten Gruppen, Copolymere von Butadien mit (Meth)acrylaten, (Meth)acrylsäure oder Acrylnitril, sowie weiterhin Copolymere bzw. Blockcopolymere von Butadien oder Isopren mit funktionelle Gruppen aufweisenden Styrolderivaten, beispielsweise Blockcopolymere aus Butadien und 4-Hydroxystyrol.

Die dritte Gruppe von Bindemitteln umfasst solche, die weder über ethylenisch ungesättigte Gruppen noch über funktionelle Gruppen verfügen. Zu nennen sind hier beispielsweise Polyolefine oder Ethylen/Propylen-Elastomere oder durch Hydrierung von Dien-Einheiten erhaltene Produkte, wie beispielsweise SEBS-Kautschuke.

Polymerschichten, die Bindemittel ohne ethylenisch ungesättigte oder funktionelle Gruppen enthalten, müssen in der Regel mechanisch, mit Hilfe energiereicher Strahlung oder einer Kombination daraus verstärkt werden, um eine optimal scharfkantige Strukturierbarkeit mittels Laser zu ermöglichen.

Man kann auch Gemische zweier oder mehrerer Bindemittel einsetzen, wobei es sich dabei sowohl um Bindemittel aus jeweils nur einer der geschilderten Gruppen handeln kann oder um Gemische von Bindemitteln aus zwei oder allen drei Gruppen. Die Kombinationsmöglichkeiten sind nur insofern beschränkt, als die Eignung der Polymerschicht für den Laserstrukturierungsprozess und den Abformvorgang nicht negativ beeinflusst werden darf. Vorteilhaft kann beispielsweise ein Gemisch von mindestens einem elastomeren Bindemittel, welches keine funktionellen Gruppen aufweist, mit mindestens einem weiteren Bindemittel, welches funktionelle Gruppen oder ethylenisch ungesättigte Gruppen aufweist, eingesetzt werden.

In einer Ausführungsform der vorliegenden Erfindung beträgt der Anteil des oder der Bindemittel in der elastomeren Schicht bzw. der betreffenden lasergravierbaren Schicht 30 Gew.-% bis 99 Gew.-% bezüglich der Summe aller Bestandteile der betreffenden elastomeren Schicht bzw. der betreffenden lasergravierbaren Schicht, bevorzugt 40 bis 95 Gew.-%, und ganz besonders bevorzugt 50 bis 90 Gew.-%.

In einer Ausführungsform der vorliegenden Erfindung bildet man Polyurethanschicht (C) mit Hilfe einer Silikonmatrize. Unter Silikonmatrizen werden im Rahmen der vorliegenden solche Matrizen verstanden, zu deren Herstellung mindestens ein Bindemittel eingesetzt wird, das mindestens eine, bevorzugt mindestens drei O-Si(R¹R²)-O-Gruppen pro Molekül aufweist, wobei die Variablen wie vorstehend definiert sind.

Optional kann die elastomere Schicht bzw. lasergravierbare Schicht reaktive niedermolekulare oder oligomere Verbindungen umfassen. Oligomere Verbindungen weisen im Allgemeinen ein Molekulargewicht von nicht mehr als 20.000 g/mol auf. Reaktive niedermolekulare und oligomere Verbindungen sollen im Folgenden der Einfachheit halber als Monomere bezeichnet werden.

Monomere können einerseits zugesetzt werden, um die Geschwindigkeit der fotochemischen oder thermochemischen Vernetzung oder der Vernetzung mittels energiereicher Strahlung zu erhöhen, sofern dies gewünscht wird. Bei Verwendung von Bindemitteln aus der ersten und zweiten Gruppe ist der Zusatz von Monomeren zur Beschleunigung im Allgemeinen nicht zwingend notwendig. Bei Bindemitteln aus der dritten Gruppe ist der Zusatz von Monomeren im Regelfalle empfehlenswert, ohne dass dies zwingend in jedem Falle notwendig wäre.

Unabhängig von der Frage der Vernetzungsgeschwindigkeit können Monomere auch zur Steuerung der Vernetzungsdichte eingesetzt werden. Je nach Art und Menge der zugesetzten niedermolekularen Verbindungen werden weitere oder engere Netzwerke erhalten. Als Monomere können einerseits bekannte ethylenisch ungesättigte Monomere eingesetzt werden. Die Monomeren sollen mit den Bindemitteln im Wesentlichen verträglich sein und mindestens eine fotochemisch oder thermochemisch reaktive Gruppe aufweisen. Sie sollten nicht leichtflüchtig sein. Bevorzugt beträgt der Siedepunkt von geeigneten Monomeren mindestens 150°C. Besonders geeignet sind Amide der Acrylsäure oder Methacrylsäure mit mono- oder polyfunktionellen Alkoholen, Aminen, Aminoalkoholen oder Hydroxyethern und -estern, Styrol oder substituierte Styrole, Ester der Fumar- oder Maleinsäure oder Allylverbindungen. Beispiele umfassen n-Butylacrylat, 2-Ethylhexylacrylat, Laurylacrylat, 1,4-Butandioldi(meth)acrylat, 1,6-Hexandioldiacrylat, 1,6-Hexandioldimethacrylat, 1,9-Nonandioldiacrylat, Trimethylolpropantrimethacrylat, Trimethylolpropantriacrylat, Dipropylenglykoldiacrylat, Tripropylenglykoldiacrylat, Dioctylfumarat, N-Dodecylmaleimid und Triallylisocyanurat.

Insbesondere für die thermochemische Verstärkung geeignete Monomere umfassen reaktive niedermolekulare Silikone wie beispielsweise zyklische Siloxane, Si-H-funktionelle Siloxane, Siloxane mit Alkoxy- oder Estergruppen, schwefelhaltige Siloxane und Silane, Dialkohole wie beispielsweise 1,4-Butandiol, 1,6-Hexandiol, 1,8-Octandiol, 1,9-Nonandiol, Diamine wie beispielsweise 1,6-Hexandiamin, 1,8-Octandiamin, Aminoalkohole wie beispielsweise Ethanolamin, Diethanolamin, Butylethanolamin, Dicarbonsäuren wie beispielsweise 1,6-Hexandicarbonsäure, Terephthalsäure, Maleinsäure oder Fumarsäure.

Es können auch Monomere eingesetzt werden, die sowohl ethylenisch ungesättigte Gruppen wie funktionelle Gruppen aufweisen. Als Beispiele seinen ω-Hydroxyalkyl(meth)acrylate genannt, wie beispielsweise Ethylenglykolmono(meth)acrylat, 1,4-Butandiolmono(meth)acrylat oder 1,6-Hexandiolmono(meth)acrylat.

Selbstverständlich können auch Gemische verschiedener Monomerer eingesetzt werden, vorausgesetzt die Eigenschaften der elastomeren Schicht werden durch die Mischung nicht negativ beeinflusst. Im Regelfalle beträgt die Menge zugesetzter Monomere 0 bis 40 Gew.-% bezüglich der Menge aller Bestandteile der elastomeren Schicht bzw. der betreffenden lasergravierbaren Schicht, bevorzugt 1 bis 20 Gew.-%.

In einer Ausführungsform kann man ein oder mehrere Monomere mit einem oder mehreren Katalysatoren einsetzen. So ist es möglich, Silikonmatrizen durch Zugabe von einer oder mehrerer Säuren oder durch Organozinnverbindungen den Schritt 2) der Bereitstellung der Matrize zu beschleunigen. Geeignete Organozinnverbindungen können sein: Di-n-butylzinndilaureat, Di-n-butylzinndiactanoat, Di-n-butylzinndi-2-ethylhexanoat, Di-n-octylzinndi-2-ethylhexanoat und Di-n-butylbis(1-oxoneodecyloxy)stannan.

Die elastomere Schicht bzw. die lasergravierbare Schicht kann weiterhin Zusatz- und Hilfsstoffe wie beispielsweise IR-Absorber, Farbstoffe, Dispergierhilfsmittel, Antistatika, Weichmacher oder abrasive Partikel umfassen. Die Menge derartiger Zusatz- und Hilfsstoffe sollte im Regelfalle 30 Gew.-% bezüglich der Menge aller Komponenten der elastomeren Schicht bzw. der betreffenden lasergravierbaren Schicht nicht überschreiten.

Die elastomere Schicht bzw. die lasergravierbare Schicht kann aus mehreren Einzelschichten aufgebaut werden. Diese Einzelschichten können von gleicher, in etwa gleicher oder von unterschiedlicher stofflicher Zusammensetzung sein. Die Dicke der lasergravierbaren Schicht bzw. aller Einzelschichten zusammen beträgt im Regelfalle zwischen 0,1 und 10 mm, bevorzugt 0,5 bis 3 mm. Die Dicke kann man abhängig von anwendungstechnischen und maschinentechnischen Prozessparametern des Lasergravurvorgangs und des Abformvorgangs geeignet auswählen.

Die elastomere Schicht bzw. die lasergravierbare Schicht kann optional weiterhin eine Oberschicht mit einer Dicke von nicht mehr als 300 µm aufweisen. Die Zusammensetzung einer solchen Oberschicht kann man im Hinblick auf optimale Gravierbarkeit und mechanische Stabilität auswählen, während die Zusammensetzung der darunter liegenden Schicht im Hinblick auf optimale Härte oder Elastizität ausgewählt wird.

In einer Ausführungsform der vorliegenden Erfindung ist die Oberschicht selbst lasergravierbar oder im Zuge der Lasergravur zusammen mit der darunter liegenden Schicht entfernbar. Die Oberschicht umfasst mindestens ein Bindemittel. Sie kann weiterhin einen Absorber für Laserstrahlung oder auch Monomere oder Hilfsmittel umfassen.

In einer Ausführungsform der vorliegenden Erfindung handelt es sich bei der Silikonmatrize um eine mit Hilfe von Lasergravur strukturierte Silikonmatrize.

Von ganz besonderem Vorteil werden für das erfindungsgemäße Verfahren thermoplastisch elastomere Bindemittel oder Silikonelastomere eingesetzt. Bei Verwendung thermoplastisch elastomerer Bindemittel erfolgt die Herstellung bevorzugt durch Extrudieren zwischen eine Trägerfolie und eine Deckfolie oder ein Deckelement gefolgt von Kalandrieren, wie beispielsweise für Flexodruckelemente in EP-A 0 084 851 offenbart. Auf diese Art und Weise lassen sich auch dickere Schichten in einem einzigen Arbeitsgang herstellen. Mehrschichtige Elemente können mittels Coextrusion hergestellt werden.

Wünscht man die Matrize mit Hilfe von Lasergravur zu strukturieren, so ist es bevorzugt, die lasergravierbare Schicht vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon zu verstärken.

Anschließend wird die lasergravierbare Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit Folie (A) verbindbare Beschichtung direkt durch Auftragen eines flüssigen Kunststoffmaterials auf die Oberfläche der Matrize und anschließender Verfestigung des Polyurethans erhalten werden kann.

In einer zweiten Variante weist die Matrize eine Positiv-Struktur auf, so dass zunächst eine Negativ-Matrize durch Abformung von der laserstrukturierten Positivmatrize hergestellt wird. Von dieser Negativ-Matrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden in die Matrize Strukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

In einer Ausführungsform der vorliegenden Erfindung arbeitet man zur Strukturierung der Matrize mit Hilfe eines Lasers Näpfchen in die Matrize ein, die eine mittlere Tiefe im Bereich von 50 bis 250 µm aufweisen und einen Mittenabstand im Bereich von 50 bis 250 µm.

Beispielsweise kann man die Matrize so gravieren, dass sie "Näpfchen" (Vertiefungen) aufweist, welche einen Durchmesser im Bereich von 10 bis 500 µm an der Oberfläche der Matrize aufweisen. Vorzugsweise beträgt der Durchmesser an der Oberfläche der Matrize 20 bis 250 µm und besonders bevorzugt 30 bis 150 µm. Der Abstand der Näpfchen kann beispielsweise 10 bis 500 µm, vorzugsweise 20 bis 200 µm, besonders bevorzugt bis 80 µm betragen.

In einer Ausführungsform der vorliegenden Erfindung weist die Matrize vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur kann beispielsweise eine Mikrorauhigkeit mit einer Rauhigkeitsamplitude im Bereich von 1 bis 30 µm und einer Rauhigkeitsfrequenz von 0,5 bis 30 µm sein. Bevorzugt liegen die Dimensionen der Mikrorauhigkeit im Bereich von 1 bis 20 µm, besonders bevorzugt 2 bis 15 µm und besonders bevorzugt 3 bis 10 µm.

Zur Lasergravur eigenen sich insbesondere IR-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifachter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge von 600 bis 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Die Laser können entweder kontinuierlich oder gepulst betrieben werden.

Im Regelfall kann die erhaltene Matrize nach der Herstellung direkt eingesetzt werden. Falls gewünscht, kann die erhaltene Matrize noch nachgereinigt werden. Durch einen solchen Reinigungsschritt werden losgelöste, aber eventuell noch nicht vollständig von der Oberfläche entfernte Schichtbestandteile entfernt. Im Regelfalle ist einfaches Behandeln mit Wasser, Wasser/Tensid, Alkoholen oder inerten organischen Reinigungsmitteln ausreichend, die vorzugsweise quellungsarm sind.

In einem weiteren Schritt bringt man eine wässrige Formulierung von Polyurethan auf die Matrize auf. Das Aufbringen kann vorzugsweise durch Aufsprühen erfolgen. Die Matrize sollte erwärmt sein, wenn man die Formulierung von Polyurethan aufbringt, beispielsweise auf Temperaturen von mindestens 80°C, bevorzugt mindestens 90°C. Das Wasser aus der wässrigen Formulierung von Polyurethan verdampft und bildet die Kapillaren in der sich verfestigenden Polyurethanschicht.

Unter wässrig wird im Zusammenhang mit der Polyurethandispersion verstanden, dass sie Wasser enthält, aber weniger als 5 Gew.-%, bezogen auf die Dispersion, bevorzugt weniger als 1 Gew.-% organisches Lösungsmittel. Besonders bevorzugt lässt sich kein flüchtiges organisches Lösungsmittel nachweisen. Unter flüchtigen organischen Lösungsmitteln werden im Rahmen der vorliegenden Erfindung solche organischen Lösungsmittel verstanden, die bei Normaldruck einen Siedepunkt von bis zu 200°C aufweisen.

Die wässrige Polyurethandispersion kann einen Feststoffgehalt im Bereich von 5 bis 60 Gew.-% auf, bevorzugt 10 bis 50 Gew.-% und besonders bevorzugt 25 bis 45 Gew.-% aufweisen.

Polyurethane (PU) sind allgemein bekannt, kommerziell erhältlich und bestehen im allgemeinen aus einer Weichphase aus höhermolekularen Polyhydroxylverbindungen, z.B. aus Polycarbonat, Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (PU) sind allgemein bekannt. Im allgemeinen werden Polyurethane (PU) durch Umsetzung von
(a) Isocyanaten, bevorzugt Diisocyanaten mit
(b) gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
(c) Kettenverlängerungsmitteln mit einem Molekulargewicht von 50 bis 499 g/mol gegebenenfalls in Gegenwart von
(d) Katalysatoren
(e) und/oder üblichen Zusatzstoffen hergestellt.

Im Folgenden sollen beispielhaft die Ausgangskomponenten und Verfahren zur Herstellung der bevorzugten Polyurethane (PU) dargelegt werden. Die bei der Herstellung der Polyurethane (PU) üblicherweise verwendeten Komponenten (a), (b), (c) sowie gegebenenfalls (d) und/oder (e) sollen im Folgenden beispielhaft beschrieben werden:
Als Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4,1-Isocyanato-3,3,5-trimethyl-5-isocyanato-methyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Bevorzugt wird 4,4'-MDI verwendet. Bevorzugt sind zudem aliphatische Diisocyanate, insbesondere Hexamethylendiisocyanat (HDI), und besonders bevorzugt sind aromatische Diisocyanate wie 2,2'-, 2,4'- und/oder 4,4'-Diphenylmethandiisocyanat (MDI) und Mischungen der vorstehend genannten Isomere.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 und 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, 1,2-Propylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (b), insbesondere zur Herstellung von weichen Polyurethanen Polyurethan (PU1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden, vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (b) anteilig auch ein oder mehr Diole oder Diamine mit einer Carbonsäuregruppe oder Sulfonsäuregruppe (b') einsetzen, insbesondere Alkalimetall- oder Ammoniumsalze von 1,1-Dimethylolbutansäure, 1,1-Dimethylolpropionsäure oder

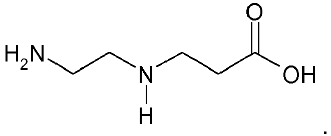

Als Kettenverlängerungsmittel (c) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (c) eingesetzt werden können.

Besonders bevorzugt handelt es sich bei den Komponenten (a) bis (c) um difunktionelle Verbindungen, d.h. Diisocyanate (a), difunktionelle Polyole, bevorzugt Polyetherole (b) und difunktionelle Kettenverlängerungsmittel, bevorzugt Diole.

Geeignete Katalysatoren (d), welche insbesondere die Reaktion zwischen den NCO-Gruppen der Diisocyanate (a) und den Hydroxylgruppen der Aufbaukomponenten (b) und (c) beschleunigen, sind an sich bekannte tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan ("DABCO") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (b) eingesetzt.

Neben Katalysator (d) können den Komponenten (a) bis (c) auch Hilfsmittel und/oder Zusatzstoffe (e) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCO₃, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Bevorzugt enthält das weiche Polyurethan Triazol und/oder Triazolderivat und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse (M_{w}) bis maximal 10.000 g/mol, bevorzugt bis maximal 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (e) auch Gemische von zwei oder mehr Antioxidantien verwendet werden.

Neben den genannten Komponenten (a), (b) und (c) und gegebenenfalls (d) und (e) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b) eingesetzt werden und fallen definitionsgemäß unter die Komponente (c).

Neben den genannten Komponenten (a), (b) und (c) und gegebenenfalls (d) und (e) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (PU) können die Komponenten (b) und (c) in relativ breiten molaren Verhältnissen gewählt werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der weichen Polyurethane mit zunehmendem Gehalt an (c) ansteigt. Die Umsetzung zur Herstellung von Polyurethan (PU) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und gegebenenfalls (c) und gegebenenfalls monofunktionellen gegenüber Isocyanaten reaktiven Komponenten als Kettenabbruchsmitteln wie z.B. Monoalkoholen.

Die Herstellung von Polyurethan (PU) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Polyurethan (PU) kann man nach an sich bekannten Verfahren in Wasser dispergieren, beispielsweise indem man Polyurethan (PU) in Aceton löst oder als Lösung in Aceton herstellt, mit Wasser versetzt und danach das Aceton entfernt, beispielsweise durch Abdestillieren. In einer Variante stellt man Polyurethan (PU) als Lösung in N-Methylpyrrolidon oder N-Ethylpyrrolidon her, versetzt mit Wasser und entfernt das N-Methylpyrrolidon bzw. N-Ethylpyrrolidon.

In einer Ausführungsform der vorliegenden Erfindung enthalten erfindungsgemäße wässrige Dispersionen zwei verschiedene Polyurethane Polyurethan (PU1) und Polyurethan (PU2) auf, von denen Polyurethan (PU1) ein so genanntes weiches Polyurethan ist, das wie oben als Polyurethan (PU) beschrieben aufgebaut ist, und mindestens ein hartes Polyurethan (PU2).

Hartes Polyurethan (PU2) kann man im Grundsatz analog zu weichem Polyurethan (PU1) herstellen, jedoch wählt man andere gegenüber Isocyanaten reaktiven Verbindungen (b) oder andere Mischungen von gegenüber Isocyanaten reaktiven Verbindungen (b), im Rahmen der vorliegenden Erfindung auch als gegenüber Isocyanaten reaktiven Verbindungen (b2) oder kurz Verbindung (b2) bezeichnet.

Beispiele für Verbindungen (b2) sind insbesondere 1,4-Butandiol, 1,6-Hexandiol und Neopentylglykol, entweder in Mischung miteinander oder in Mischung mit Polyethylenglykol.

In einer Variante der vorliegenden Erfindung wählt man als Diisocyanat (a) und Polyurethan (PU2) jeweils Mischungen von Diisocyanaten, beispielsweise Mischungen von HDI und IPDI, wobei man zur Herstellung von hartem Polyurethan (PU2) größere Anteile an IPDI wählt als zur Herstellung von weichem Polyurethan (PU1).

In einer Ausführungsform der vorliegenden Erfindung weist Polyurethan (PU2) einen Shore-Härte A im Bereich von über 60 bis maximal 100 auf, wobei die Shore-Härte A nach DIN 53505 nach 3 s bestimmt wurde.

In einer Ausführungsform der vorliegenden Erfindung weist Polyurethan (PU) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (PU1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (PU2) einen mittleren Partikeldurchmesser im Bereich im Bereich von 100 bis 300 nm, bevorzugt 120 bis 150 nm auf, bestimmt durch Laserlichtstreuung.

Die wässrige Polyurethandispersion kann weiterhin mindestens einen Härter, der auch als Vernetzer bezeichnet werden kann, aufweisen. Als Härter sind Verbindungen geeignet, die mehrere Polyurethanmoleküle miteinander vernetzen können, beispielsweise bei thermischer Aktivierung. Besonders geeignet sind Vernetzer auf Basis von trimeren Diisocyanaten, insbesondere auf Basis von aliphatischen Diisocyanaten wie Hexamethylendiisocyanat. Ganz besonders bevorzugt sind Vernetzer der Formel I a oder I b, im Rahmen der vorliegenden Erfindung auch kurz Verbindung (V) genannt, 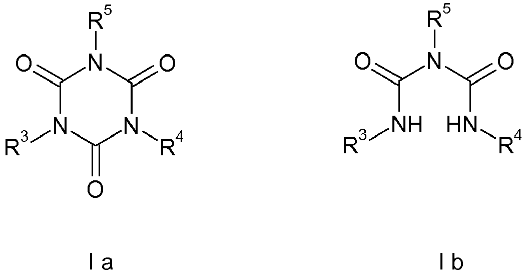
wobei R³, R⁴ und R⁵ verschieden oder vorzugsweise gleich sein können und gewählt werden aus A¹-NCO und A¹-NH-CO-X, wobei
A¹ ein Spacer mit 2 bis 20 C-Atomen ist, gewählt aus Arylen, unsubstituiert oder substituiert mit einer bis vier C₁-C₄-Alkylgruppen, Alkylen und Cycloalkylen, beispielsweise 1,4-Cyclohexylen. Bevorzugte Spacer A¹ sind Phenylen, insbesondere para-Phenylen, weiterhin Toluylen, insbesondere para-Toluylen, und C₂-C₁₂-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-.
X gewählt wird O(AO)ₓR⁶, wobei
AO ist C₂-C₄-Alkylenoxid, beispielsweise Butylenoxid, insbesondere Ethylenoxid (CH₂CH₂O) oder Propylenoxid (CH(CH₃)CH₂O) bzw. (CH₂CH(CH₃)O),
x ist eine ganze Zahl im Bereich von 1 bis 50, bevorzugt 5 bis 25, und
R⁶ ist gewählt aus Wasserstoff und C₁-C₃₀-Alkyl, insbesondere C₁-C₁₀-Alkyl wie Methyl, Ethyl, n-Propyl, iso-Propyl, n-Butyl, iso-Butyl, sec.-Butyl, tert.-Butyl, n-Pentyl, isoPentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl.

Besonders bevorzugte Verbindungen (V) sind solche, bei denen R³, R⁴ und R⁵ jeweils gleich (CH₂)₄-NCO, (CH₂)₆-NCO oder (CH₂)₁₂-NCO sind.

Wässrige Polyurethandispersionen können weitere Bestandteile enthalten, beispielsweise
(f) eine Silikonverbindung mit reaktiven Gruppen,
im Rahmen der vorliegenden Erfindung auch Silikonverbindung (f) genannt.

Beispiele für reaktive Gruppen im Zusammenhang mit Silikonverbindungen (f) sind beispielsweise Carbonsäuregruppen, Carbonsäurederivate wie beispielsweise Carbonsäuremethylester oder Carbonsäureanhydride, insbesondere Bernsteinsäureanhydridgruppen, und besonders bevorzugt Carbonsäuregruppen.

Beispiele für reaktive Gruppen sind weiterhin primäre und sekundäre Aminogruppen, beispielsweise NH(iso-C₃H₇)-Gruppen, NH(n-C₃H₇)-Gruppen, NH(cyclo-C₆H₁₁)-Gruppen und NH(n-C₄H₉)-Gruppen, insbesondere NH(C₂H₅)-Gruppen und NH(CH₃)-Gruppen, und ganz besonders bevorzugt NH₂-Gruppen.

Weiterhin sind Aminoalkylaminogruppen bevorzugt wie beispielsweise -NH-CH₂-CH₂-NH₂-Gruppen, -NH-CH₂-CH₂-CH₂-NH₂-Gruppen, -NH-CH₂-CH₂-NH(C₂H₅)-Gruppen, -NH-CH₂-CH₂-CH₂-NH(C₂H₅)-Gruppen, -NH-CH₂-CH₂-NH(CH₃)-Gruppen, -NH-CH₂-CH₂-CH₂-NH(CH₃)-Gruppen.

Die reaktive Gruppe bzw. die reaktiven Gruppen sind an Silikonverbindung (f) entweder direkt oder vorzugsweise über einen Spacer A² gebunden. A² wird gewählt aus Arylen, unsubstituiert oder substituiert mit einer bis vier C₁-C₄-Alkylgruppen, Alkylen und Cycloalkylen wie beispielsweise 1,4-Cyclohexylen. Bevorzugte Spacer A² sind Phenylen, insbesondere para-Phenylen, weiterhin Toluylen, insbesondere para-Toluylen, und C₂-C₁₈-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-, -(CH₂)₁₄-, -(CH₂)₁₆- und -(CH₂)₁₈-.

Zusätzlich zu den reaktiven Gruppen enthält Silikonverbindung (f) nicht-reaktive Gruppen, insbesondere Di-C₁-C₁₀-alkyl-SiO₂-Gruppen oder Phenyl-C₁-C₁₀-Alkyl-SiO₂-Gruppen, insbesondere Dimethyl-SiO₂-Gruppen, und gegebenenfalls eine oder mehrere Si(CH₃)₂-OH-Gruppen oder Si(CH₃)₃-Gruppen.

In einer Ausführungsform der vorliegenden Erfindung weist Silikonverbindung (f) im Mittel ein bis vier reaktive Gruppen pro Molekül auf.

In einer speziellen Ausführungsform der vorliegenden Erfindung weist Silikonverbindung (f) im Mittel ein bis vier COOH-Gruppen pro Molekül auf.

In einer anderen speziellen Ausführungsform der vorliegenden Erfindung weist Silikonverbindung (f) im Mittel ein bis vier Aminogruppen oder Aminoalkylaminogruppen pro Molekül auf.

Silikonverbindung (f) weist kettenförmig oder verzweigt angeordnete Si-O-Si-Einheiten auf.

In einer Ausführungsform der vorliegenden Erfindung weist Silikonverbindung (f) ein Molekulargewicht Mₙ im Bereich von 500 bis 10.000 g/mol auf, bevorzugt bis 5.000 g/mol.

Wenn Silikonverbindung (f) mehrere reaktive Gruppen pro Molekül aufweist, so können diese reaktiven Gruppen - direkt oder über Spacer A² - über mehrere Si-Atome oder paarweise über dasselbe Si-Atom an der Si-O-Si-Kette gebunden sein.

Die reaktiven Gruppen bzw. die reaktive Gruppe kann an einem oder mehreren der terminalen Si-Atome von Silikonverbindung (f) - direkt oder über Spacer A² - gebunden sein. In einer anderen Ausführungsform der vorliegenden Erfindung ist die reaktive Gruppe bzw. sind die reaktiven Gruppen an einem oder mehreren der nicht terminalen Si-Atome von Silikonverbindung (f) - direkt oder über Spacer A² - gebunden.

In einer Ausführungsform der vorliegenden Erfindung enthält wässrige Polyurethan-dispersion weiterhin
ein Polydi-C₁-C₄-Alkylsiloxan (g), das weder Aminogruppen noch COOH-Gruppen aufweist, vorzugsweise ein Polydimethylsiloxan, im Rahmen der vorliegenden Erfindung auch kurz Polydialkylsiloxan (g) bzw. Polydimethylsiloxan (g) genannt.

Dabei kann C₁-C₄-Alkyl in Polydialkylsiloxan (g) verschieden oder vorzugsweise gleich sein und gewählt aus Methyl, Ethyl, n-Propyl, iso-Propyl, n-Butyl, iso-Butyl, sec.-Butyl und tert.-Butyl, wobei unverzweigtes C₁-C₄-Alkyl bevorzugt ist, besonders bevorzugt ist Methyl.

Bei Polydialkylsiloxan (g) und vorzugsweise bei Polydimethylsiloxan (g) handelt es sich vorzugsweise um unverzweigte Polysiloxane mit Si-O-Si-Ketten oder um solche Polysiloxane, die bis zu 3, bevorzugt maximal eine Verzweigung pro Molekül aufweisen.

Polydialkylsiloxan (D) und insbesondere Polydimethylsiloxan (g) kann eine oder mehrere Si(C₁-C₄-Alkyl)₂-OH-Gruppen aufweisen.

In einer Ausführungsform der vorliegenden Erfindung enthält wässrige Polyurethan-dispersion
insgesamt im Bereich von 20 bis 30 Gew.-% Polyurethan (PU), bzw. insgesamt im Bereich von 20 bis 30 Gew.-% Polyurethane (PU1) und (PU2),
im Bereich von 1 bis 10, bevorzugt 2 bis 5 Gew.-% Härter,
im Bereich von 1 bis 10 Gew.-% Silikonverbindung (f),
im Bereich von null bis 10, bevorzugt 0,5 bis 5 Gew.-% Polydialkylsiloxan (g).

In einer Ausführungsform der vorliegenden Erfindung enthält wässrige Polyurethan-dispersion
im Bereich von 10 bis 30 Gew.-% weiches Polyurethan (PU1) und
im Bereich von null bis 20 Gew.-% hartes Polyurethan (PU2).

In einer Ausführungsform der vorliegenden Erfindung weist erfindungsgemäße wässrige Dispersion einen Feststoffgehalt von insgesamt 5 bis 60 Gew.-% auf, bevorzugt 10 bis 50 Gew.-% und besonders bevorzugt 25 bis 45 Gew.-%.

Dabei bezeichnen Angaben in Gew.-% jeweils den Wirkstoff bzw. Feststoff und sind auf die gesamte erfindungsgemäße wässrige Dispersion bezogen. Der zu 100 Gew.-% fehlende Rest ist vorzugsweise kontinuierliche Phase, beispielsweise Wasser oder ein Gemisch von einem oder mehreren organischen Lösemitteln und Wasser.

In einer Ausführungsform der vorliegenden Erfindung enthält wässrige Polyurethan-dispersion mindestens einen Zusatz (h), gewählt aus Pigmenten, Mattierungsmitteln, Lichtschutzmitteln, Antistatika, Antisoil, Antiknarz, Verdickungsmitteln, insbesondere Verdickungsmitteln auf Basis von Polyurethanen, und Mikrohohlkugeln.

In einer Ausführungsform der vorliegenden Erfindung enthält wässrige Polyurethan-dispersion insgesamt bis zu 20 Gew.-% an Zusätzen (h).

Wässrige Polyurethandispersion kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol").

Zur Herstellung von wässrigen Polyurethandispersionen kann man Polyurethan (PU), Härter und Silikonverbindung (f) mit Wasser und gegebenenfalls einem oder mehreren der vorstehend genannten organischen Lösemittel vermischen. Weiterhin vermischt man, falls gewünscht, mit Polydialkylsiloxan (g) und Zusätzen (h). Das Vermischen kann man beispielsweise durch Verrühren durchführen. Dabei ist die Reihenfolge der Zugabe von Polyurethan (PU), Härter, Silikonverbindung (f) und Wasser und gegebenenfalls einem oder mehreren der vorstehend genannten organischen Lösemittel sowie - falls gewünscht - Polydialkylsiloxan (g) und Zusätzen (h) beliebig.

Bevorzugt geht man von einem in Wasser oder einem Gemisch aus Wasser und organischem Lösemittel dispergierten Polyurethan (PU) oder von dispergiertem weichem Polyurethan (PU1) und hartem Polyurethan (PU2) aus und gibt, vorzugsweise unter Rühren, Härter und Silikonverbindung (f) sowie, falls gewünscht, Polydialkylsiloxan (g) und gegebenenfalls ein oder mehrere organische Lösemittel zu. Vorzugsweise unterlässt man jedoch die Zugabe von organischem Lösemittel.

In einer speziellen Ausführungsform gibt man Verdickungsmittel als Beispiel für einen Zusatz (h) als letztes zu und stellt so die gewünschte Viskosität der wässrigen Polyurethandispersion ein.

Nach dem Aushärten der Polyurethanschicht (C) trennt man sie von der Matrize, beispielsweise durch Abziehen, und erhält einen Polyurethanfilm (C), der in erfindungsgemäßem mehrschichtigem Verbundmaterial die Polyurethanschicht (C) bildet.

In einem weiteren Arbeitsgang des erfindungsgemäßen Herstellverfahrens bringt man vorzugsweise organischen Klebstoff auf Polyurethanfilm (C) oder Folie (A) auf, und zwar nicht vollflächig, beispielsweise in Form von Punkten oder Streifen. In einer Variante der vorliegenden Erfindung bringt man einen vorzugsweise organischen Klebstoff auf Polyurethanfilm (C) und einen vorzugsweise organischen Klebstoff auf Folie (A) auf, wobei sich die beiden Klebstoffe unterscheiden, beispielsweise durch einen oder mehrere Zusätze oder dadurch, dass es sich um chemisch verschiedene vorzugsweise organische Klebstoffe handelt. Anschließend verbindet man Polyurethanfilm (C) und Folie (A), und zwar so, dass die Schicht(en) von Klebstoff zwischen Polyurethanfilm (C) und Folie (A) zu liegen kommen. Man härtet den Klebstoff bzw. die Klebstoffe aus, beispielsweise thermisch, durch aktinische Strahlung oder durch Alterung, und erhält erfindungsgemäßes mehrschichtiges Verbundmaterial.

In einer Ausführungsform der vorliegenden Erfindung platziert man eine Zwischenschicht (D) zwischen Folie (A) und Verbindungsschicht (B), zwischen Verbindungsschicht (B) und Polyurethanschicht (C) oder zwischen zwei Verbindungsschichten (C).

Die Zwischenschicht (D) ist wie vorstehend definiert.

Das Platzieren kann manuell oder maschinell erfolgen, kontinuierlich oder diskontinuierlich.

Ein weiterer Gegenstand der vorliegenden Erfindung ist die Verwendung von erfindungsgemäßen mehrschichtigen Verbundmaterialien als oder zur Herstellung von Verpackungsmaterialien, beispielsweise Kartons, Kisten, Schachteln, Einbänden oder Umhüllungen. Dabei können die Verpackungsmaterialien auch teilweise oder überwiegend dekorativen Zwecken dienen. Ein weiterer Gegenstand der vorliegenden Erfindung sind Verpackungsmaterialien, bestehend aus oder hergestellt unter Verwendung von erfindungsgemäßen mehrschichtigen Verbundmaterialien. Ein weiterer Gegenstand der vorliegenden Erfindung ist die Verwendung von erfindungsgemäßen mehrschichtigen Verbundmaterialien als oder zur Herstellung von Dekorationsmaterialien. Ein weiterer Gegenstand der vorliegenden Erfindung sind Dekorationsmaterialien, bestehend aus oder hergestellt unter Verwendung von erfindungsgemäßen mehrschichtigen Verbundmaterialien. Beispiele sind Girlanden und Kaschierungen.

Ein weiterer Gegenstand der vorliegenden Erfindung ist die Verwendung von erfindungsgemäße Verbundmaterialien zur Herstellung von aufwändigen Druckerzeugnissen wie Broschüren, Prospekten, Katalogen, insbesondere Jahresberichten und Büchern, beispielsweise Bucheinbänden.

Ein weiterer Gegenstand der vorliegenden Erfindung sind elektrische oder elektronische Geräte, insbesondere Mobiltelefone, hergestellt unter Verwendung eines erfindungsgemäßen mehrschichtigen Verbundmaterials, das vorzugsweise tiefgezogen sein kann.

Die Erfindung wird durch Arbeitsbeispiele weiter erläutert.
I. Herstellung der Ausgangsmaterialien
I.1 Herstellung einer wässrigen Polyurethandispersion Disp.1

In einem Rührgefäß vermischte man unter Rühren:
7 Gew.-% einer wässrigen Dispersion (Partikeldurchmesser: 125 nm, Feststoffgehalt: 40%) eines weichen Polyurethans (PU1.1), hergestellt aus Hexamethylendiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), sowie 3 Gew.-% einfach methyliertem Polyethylenglykol (c.1) sowie 3 Gew.-% H2N-CH2CH2-NH-CH2CH2-COOH, Gew.-% jeweils bezogen auf Polyesterdiol (b1.1),
Erweichungspunkt von weichem Polyurethan (PU1.1): 62°C, Erweichung beginnt bei 55°C, Shore-Härte A 54,
65 Gew.-% einer wässrigen Dispersion (Partikeldurchmesser: 150 nm) eines harten Polyurethans (PU2.2), erhältlich durch Umsetzung von Isophorondiisocyanat (a1.2), 1,4-Butandiol, 1,1-Dimethylolpropionsäure, Hydrazinhydrat und Polypropylenglykol mit einem Molekulargewicht M_{w} von 4200 g/mol, Erweichungspunkt von 195°C, Shore-Härte A 86,
3,5 Gew.-% einer 70 Gew.-% Lösung (in Propylencarbonat) von Verbindung (V.1), 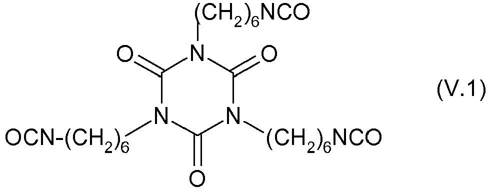
6 Gew.-% einer 65 Gew.-% wässrigen Dispersion der Silikonverbindung nach Beispiel 2 aus EP-A 0 738 747 (f.1)
2 Gew.-% Ruß,
0,5 Gew.-% eines Verdickungsmittels auf Polyurethanbasis,
1 Gew.-% Mikrohohlkugeln aus Polyvinylidenchlorid, gefüllt mit Isobutan, Durchmesser 20 µm, kommerziell erhältlich z. B. als Expancel® der Fa. Akzo Nobel.

Man erhielt wässrige Dispersion Disp.1 mit einem Feststoffgehalt von 35% und einer kinematischen Viskosität von 25 Sek. bei 23°C, bestimmt nach DIN EN ISO 2431, Stand Mai 1996.

### I.2 Herstellung einer wässrigen Formulierung Disp.2

In einem Rührgefäß vermischte man unter Rühren:
7 Gew.-% einer wässrigen Dispersion (Partikeldurchmesser: 125 nm), Feststoffgehalt: 40%) eines weichen Polyurethans (PU1.1), hergestellt aus Hexamethylendiisocyanat (a1.1) und Isophorondiisocyanat (a1.2) im Gew.-Verhältnis 13:10 als Diisocyanate und und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), 3 Gew.-% einfach methyliertem Polyethylenglykol (c.1) sowie 3 Gew.-% H2N-CH2CH2-NH-CH2CH2-COOH, Gew.-% jeweils bezogen auf Polyesterdiol (b1.1),
Erweichungspunkt von 62°C, Erweichung beginnt bei 55°C, Shore-Härte A 54,
65 Gew.-% einer wässrigen Dispersion (Partikeldurchmesser: 150 nm) eines harten Polyurethans (α2.2), erhältlich durch Umsetzung von Isophorondiisocyanat (a1.2), 1,4-Butandiol (PU1.2), 1,1-Dimethylolpropionsäure, Hydrazinhydrat und Polypropylenglykol mit einem Molekulargewicht M_{w} von 4200 g/mol (b1.3), Polyurethan (PU2.2) hatte einen Erweichungspunkt von 195°C, Shore-Härte A 90,
3,5 Gew.-% einer 70 Gew.-% Lösung (in Propylencarbonat) von Verbindung (V.1), NCO-Gehalt 12%,
2 Gew.-% Ruß.

Man erhielt eine Polyurethandispersion Disp.2 mit einem Feststoffgehalt von 35% und einer kinematischen Viskosität von 25 Sek., bestimmt nach bei 23°C nach DIN EN ISO 2431, Stand Mai 1996.

### II. Herstellung einer Matrize

Ein flüssiges Silikon wurde auf eine Unterlage gegossen, die das Muster eines vollnarbigen Kalbsleders aufwies. Man ließ aushärten, indem man eine Lösung von Di-n-butylbis(1-oxoneodecyloxy)stannan als 25 Gew.-% Lösung in Tetraethoxysilan als sauren Härter dazu gab, und erhielt eine im Mittel 2 mm starke Silikonkautschukschicht, die als Matrize diente. Die Matrize wurde auf einen 1,5 mm dicken Aluminiumträger aufgeklebt.

### III. Auftragung von wässrigen Polyurethandispersionen auf Matrize aus II.

Die Matrize aus II. wurde auf eine beheizbare Unterlage gelegt und auf 91°C erwärmt. Anschließend wurde durch eine Sprühdüse Disp.1 aufgesprüht, und zwar 88 g/m² (nass). Das Auftragen erfolgte ohne Luftbeimengung mit einer Sprühdüse, die einen Durchmesser von 0,46 mm besaß, bei einem Druck von 65 bar. Man ließ bei 91°C verfestigen, bis die Oberfläche nicht mehr klebrig war.

Die Sprühdüse war in einer Höhe von 20 cm von der durchlaufenden Unterlage in Bewegungsrichtung derselben mobil angeordnet und bewegte sich quer zu der Bewegungsrichtung der Unterlage. Die Unterlage hatte nach etwa 14 Sekunden die Sprühdüse passiert und besaß eine Temperatur von 59°C. Nach einer etwa zweiminütigen Beaufschlagung mit trockener, 85°C warmer Luft war der so hergestellte, netzartig aussehende Polyurethanfilm (C.1) nahezu wasserfrei.

In einer analogen Anordnung wurde unmittelbar im Anschluss auf die so beschichtete Matrize 50 g/m² nass von Disp.2 als Verbindungsschicht (B.1) aufgetragen und anschließend trocknen gelassen.

Man erhielt eine mit Polyurethanfilm (C.1) und Verbindungsschicht (B.1) beschichtete Matrize.

Eine Polycarbonatfolie (A.1), Basis Bisphenol A, mit einer Dicke von 0,1 mm wurde mit Disp.2 besprüht, und zwar mit 30 g/m² (nass). Man ließ die so besprühte Polcarbonatfolie mehrere Minuten antrocken.

### IV. Herstellung eines erfindungsgemäßen mehrschichtigen Verbundmaterials

Anschließend wird Polycarbonatfolie (A.1) mit der besprühten Seite auf die noch warme Verbindungsschicht (B.1), die sich zusammen mit Polyurethanfilm (C.1) auf der Matrize befindet, gelegt und in einer Presse bei 4 bar und 110°C für 15 Sekunden verpresst. Anschließend entnimmt man das so erhaltene erfindungsgemäße mehrschichtige Verbundmaterial MSV.1 aus der Presse und entfernt die Matrize.

Das so erhaltene erfindungsgemäße mehrschichtige Verbundmaterial MSV.1 zeichnet sich aus durch eine angenehme Haptik, eine Optik, die identisch mit einer Lederoberfläche ist, sowie Atmungsaktivität aus. Außerdem lässt sich das erfindungsgemäße mehrschichtige Verbundmaterial MSV.1 leicht von Verschmutzungen wie beispielsweise Staub reinigen.
MSV.1 lässt sich tiefziehen.

## Patentansprüche

1. Mehrschichtiges Verbundmaterial, umfassend als Komponenten:
(A) eine Kunststoff- oder Metallfolie,
(B) mindestens eine Verbindungsschicht und
(C) eine Polyurethanschicht, die Kapillaren aufweist, die über die gesamte Dicke der Polyurethanschicht gehen,
wobei Polyurethanschicht (C) eine mittlere Dicke im Bereich von 15 bis 300 µm und eine Musterung aufweist,
wobei eine Kunststofffolie ein Flächengebilde aus einem synthetischen Polymer ist, das eine Dicke von 0,5 µm bis 1 mm aufweist, und
wobei Verbindungsschicht (B) eine Schicht eines gehärteten organischen Klebstoffs ist.

2. Mehrschichtiges Verbundmaterial nach Anspruch 1, **dadurch gekennzeichnet, dass** Kunststofffolie (A) gewählt wird aus Folien aus Polyethylen, Polypropylen, Polyester, Polyamid, Polycarbonat, Polyvinylchlorid oder Polystyrol.

3. Mehrschichtiges Verbundmaterial nach einem der Ansprüche 1 bis 2, **dadurch gekennzeichnet, dass** die Polyurethanschicht (C) eine samtartige Erscheinung aufweist.

4. Mehrschichtiges Verbundmaterial nach einem der Ansprüche 1 bis 3, **dadurch gekennzeichnet, dass** es sich bei der Verbindungsschicht (B) um eine durchbrochene Schicht eines gehärteten organischen Klebstoffs handelt.

5. Mehrschichtiges Verbundmaterial nach einem der Ansprüche 1 bis 4, **dadurch gekennzeichnet, dass** es zusätzlich mindestens eine Zwischenschicht (D) umfasst, die zwischen Kunststoff- oder Metallfolie (A) und Verbindungsschicht (B), zwischen Verbindungsschicht (B) und Polyurethanschicht (C) oder zwischen zwei Verbindungsschichten (B) liegt, wobei Zwischenschicht (D) gewählt wird aus Textil, Vliesstoffen, Leder und offenzelligem Schaumstoff.

6. Verfahren zur Herstellung von mehrschichtigen Verbundmaterialien nach einem der Ansprüche 1 bis 5, **dadurch gekennzeichnet, dass** man mit Hilfe einer Matrize eine Polyurethanschicht (C) bildet, mindestens einen organischen Klebstoff vollflächig oder partiell auf Kunststoff- oder Metallfolie (A) und/oder auf Polyurethanschicht (C) aufbringt und dann Polyurethanschicht (C) mit Kunststoff- oder Metallfolie (A) punktförmig, streifenartig oder flächig verbindet.

7. Verfahren nach Anspruch 6, **dadurch gekennzeichnet, dass** man Kunststofffolie (A) wählt aus Folien aus Polyethylen, Polypropylen, Polyester, Polyamid, Polycarbonat, Polyvinylchlorid oder Polystyrol.

8. Verfahren nach Anspruch 6 oder 7, **dadurch gekennzeichnet, dass** man Polyurethanschicht (C) mit Hilfe einer Silikonmatrize bildet.

9. Verfahren nach einem der Ansprüche 6 bis 8, **dadurch gekennzeichnet, dass** es sich bei der Silikonmatrize um eine mit Hilfe von Lasergravur strukturierte Silikonmatrize handelt.

10. Verfahren nach einem der Ansprüche 6 bis 9, dass man zur Strukturierung der Matrize mit Hilfe eines Lasers Näpfchen in die Matrize einarbeitet, die eine mittlere Tiefe im Bereich von 50 bis 250 µm aufweisen und einen Mittenabstand im Bereich von 50 bis 250 µm.

11. Verfahren nach einem der Ansprüche 6 bis 10, **dadurch gekennzeichnet, dass** man eine Zwischenschicht (D) zwischen Kunststoff- oder Metallfolie (A) und Verbindungsschicht (B), zwischen Verbindungsschicht (B) und Polyurethanschicht (C) oder zwischen zwei Verbindungsschichten (B) platziert.

12. Verwendung von mehrschichtigen Verbundmaterialien nach einem der Ansprüche 1 bis 5 als Verpackungsmaterial.

13. Verpackungsmaterialien, bestehend aus oder hergestellt unter Verwendung von mehrschichtigen Verbundmaterialien nach einem der Ansprüche 1 bis 5.

14. Verwendung von mehrschichtigen Verbundmaterialien nach einem der Ansprüche 1 bis 5 als Dekorationsmaterial.

15. Dekorationsmaterialien, bestehend aus oder hergestellt unter Verwendung von mehrschichtigen Verbundmaterialien nach einem der Ansprüche 1 bis 5.

## Claims

1. Multilayered composite material comprising as components:
(A) a plastics or metal foil,
(B) at least one bonding layer and
(C) a polyurethane layer with capillaries passing through the entire thickness of the polyurethane layer,
wherein polyurethane layer (C) has an average thickness in the range from 15 to 300 µm and exhibits patterning, wherein a plastics foil is a sheetlike structure composed of a synthetic polymer, which has a thickness of 0.5 µm to 1 mm, and wherein bonding layer (B) is a layer of a cured organic adhesive.

2. Multilayered composite material according to Claim 1 **characterized in that** plastics foil (A) is selected from self-supporting film/sheet of polyethylene, polypropylene, polyester, polyamide, polycarbonate, polyvinyl chloride or polystyrene.

3. Multilayered composite material according to any one of Claims 1 to 2 **characterized in that** said polyurethane layer (C) has a velvetlike appearance.

4. Multilayered composite material according to any one of Claims 1 to 3 **characterized in that** the bonding layer (B) comprises an interrupted layer of a cured organic adhesive.

5. Multilayered composite material according to any one of Claims 1 to 4 **characterized in that** it additionally comprises at least one interlayer (D) disposed between plastics or metal foil (A) and bonding layer (B), between bonding layer (B) and polyurethane layer (C) or between two bonding layers (B), where interlayer (D) is selected from textile, batt materials, leather and open-cell foam.

6. Process for producing a multilayered composite material according to any one of Claims 1 to 5, **characterized in that** it comprises forming a polyurethane layer (C) with the aid of a mold, applying at least one organic adhesive uniformly or partially onto plastic film or metal foil (A) and/or onto polyurethane layer (C) and then bonding polyurethane layer (C) pointwise, stripwise or areawise to plastic film or metal foil (A).

7. Process according to Claim 6 **characterized in that** plastics foil (A) is selected from self-supporting film/sheet of polyethylene, polypropylene, polyester, polyamide, polycarbonate, polyvinyl chloride or polystyrene.

8. Process according to Claim 6 or 7 **characterized in that** said polyurethane layer (C) is formed with the aid of a silicone mold.

9. Process according to any one of Claims 6 to 8 **characterized in that** said silicone mold comprises a silicone mold structured with the aid of laser engraving.

10. Process according to any one of Claims 6 to 9 **characterized in that** said mold is structured by using a laser to cut wells into the mold which have an average depth in the range from 50 to 250 µm and a center-to-center spacing in the range from 50 to 250 µm.

11. Process according to any one of Claims 6 to 10 **characterized in that** an interlayer (D) is placed between said plastic film or metal foil (A) and said bonding layer (B), between said bonding layer (B) and polyurethane layer (C), or between two bonding layers (B).

12. Use of a multilayered composite material according to any one of Claims 1 to 5 as a packaging material.

13. Packaging material consisting of or obtained using a multilayered composite material according to any one of Claims 1 to 5.

14. Use of a multilayered composite material according to any one of Claims 1 to 5 as a decorative material.

15. Decorative material consisting of or obtained using a multilayered composite material according to any one of Claims 1 to 5.

## Revendications

1. Matériau composite multicouche, comprenant comme composants :
(A) une feuille en matériau synthétique ou en métal,
(B) au moins une couche de liaison et
(C) une couche de polyuréthane, qui présente des capillaires qui s'étendent sur toute l'épaisseur de la couche de polyuréthane,
la couche de polyuréthane (C) présentant une épaisseur moyenne dans la plage de 15 à 300 µm et un motif,
une feuille en matériau synthétique étant une structure plane en un polymère synthétique qui présente une épaisseur de 0,5 µm à 1 mm et
la couche de liaison (B) étant une couche d'un adhésif organique durci.

2. Matériau composite multicouche selon la revendication 1, **caractérisé en ce que** la feuille en matériau synthétique (A) est choisie parmi les feuilles en polyéthylène, en polypropylène, en polyester, en polyamide, en polycarbonate, en poly(chlorure de vinyle) ou en polystyrène.

3. Matériau composite multicouche selon l'une quelconque des revendications 1 à 2, **caractérisé en ce que** la couche de polyuréthane (C) présente un aspect de velours.

4. Matériau composite multicouche selon l'une quelconque des revendications 1 à 3, **caractérisé en ce qu'**il s'agit, pour la couche de liaison (B), d'une couche ajourée d'un adhésif organique durci.

5. Matériau composite multicouche selon l'une quelconque des revendications 1 à 4, **caractérisé en ce qu'**il comprend en outre au moins une couche intermédiaire (D), qui se situe entre la feuille en matériau synthétique ou en métal (A) et la couche de liaison (B), entre la couche de liaison (B) et la couche de polyuréthane (C) ou entre deux couches de liaison (B), la couche intermédiaire (D) étant choisie parmi le textile, les non-tissés, le cuir et une mousse à pores ouverts.

6. Procédé pour la préparation de matériaux composites multicouches selon l'une quelconque des revendications 1 à 5, **caractérisé en ce qu'**on forme une couche de polyuréthane (C) à l'aide d'une matrice, on applique au moins un adhésif organique sur toute la surface ou partiellement sur la feuille en matériau synthétique ou en métal (A) et/ou sur la couche de polyuréthane (C), puis on relie la couche de polyuréthane (C) avec la feuille en matériau synthétique ou en métal (A) par des points, des lignes ou en surface.

7. Procédé selon la revendication 6, **caractérisé en ce qu'**on choisit la feuille en matériau synthétique (A) parmi les feuilles en polyéthylène, en polypropylène, en polyester, en polyamide, en polycarbonate, en poly(chlorure de vinyle) ou en polystyrène.

8. Procédé selon la revendication 6 ou 7, **caractérisé en ce qu'**on forme la couche de polyuréthane (C) à l'aide d'une matrice en silicone.

9. Procédé selon l'une quelconque des revendications 6 à 8, **caractérisé en ce qu'**il s'agit, pour la matrice en silicone, d'une matrice en silicone structurée par gravure par laser.

10. Procédé selon l'une quelconque des revendications 6 à 9, **caractérisé en ce qu'**on incorpore dans la matrice, à l'aide d'un laser, pour la structuration de la matrice, des alvéoles qui présentent une profondeur moyenne dans la plage de 50 à 250 µm et une distance entre les centres dans la plage de 50 à 250 µm.

11. Procédé selon l'une quelconque des revendications 6 à 10, **caractérisé en ce qu'**on place une couche intermédiaire (D) entre la feuille en matériau synthétique ou en métal (A) et la couche de liaison (B), entre la couche de liaison (B) et la couche de polyuréthane (C) ou entre deux couches de liaison (B).

12. Utilisation de matériaux composites multicouches selon l'une quelconque des revendications 1 à 5 comme matériau d'emballage.

13. Matériaux d'emballage, constitués par ou fabriqués avec utilisation de matériaux composites multicouches selon l'une quelconque des revendications 1 à 5.

14. Utilisation de matériaux composites multicouches selon l'une quelconque des revendications 1 à 5 comme matériau décoratif.

15. Matériaux décoratifs, constitués par ou fabriqués avec utilisation de matériaux composites multicouches selon l'une quelconque des revendications 1 à 5.
